# EUROPÄISCHE PATENTSCHRIFT

(11) **EP 1 922 594 B1**
(45) Veröffentlichungstag und Bekanntmachung des Hinweises auf die Patenterteilung: **05.11.2014**
(21) Anmeldenummer: 06776949.7
(22) Anmeldetag: 18.08.2006
(51) Int. Cl.: B29C 49/78, B29C 49/42, B29C 49/06, B29C 49/36

(54) **VERFAHREN UND VORRICHTUNG ZUR STEUERUNG UND REGELUNG EINER HOHLKÖRPERHERSTELLUNGSEINHEIT**
METHOD AND DEVICE FOR CONTROLLING AND REGULATING A UNIT FOR PRODUCING HOLLOW BODIES
PROCEDE ET DISPOSITIF POUR COMMANDER ET REGLER UNE UNITE DE REALISATION DE CORPS CREUX

(30) Priorität: 08.09.2005 DE 102005042926
(43) Veröffentlichungstag der Anmeldung: 21.05.2008
(60) Teilanmeldung: 14172519.2
(73) Patentinhaber: Krones AG, 93073 Neutraubling (DE)
(72) Erfinder: VOTH, Klaus, 93083 Obertraubling (DE); GELTINGER, Florian, 84163 Marklkofen (DE); BLOCHMANN, Erik, 93073 Neutraubling (DE); SCHMID, Florian, 93346 Ihrlerstein (DE); BRUNNER, Andreas, 93089 Aufhausen (DE)
(74) Vertreter: Grünecker, Kinkeldey, Stockmair & Schwanhäusser
(86) Internationale Anmeldenummer: PCT/EP2006/008154
(87) Internationale Veröffentlichungsnummer: WO 2007/028493

(56) Entgegenhaltungen:
- EP-A2- 1 306 195
- DE-A1- 10 246 564
- JP-A- 2002 317 770
- US-A1- 2003 183 966
- US-A1- 2004 173 949

## Beschreibung

Die Erfindung betrifft ein Verfahren zur Steuerung und Regelung einer Flaschenherstellungseinheit (nachfolgend auch Hohlkörperherstellungseinheit genannt) gemäß dem Oberbegriff des Anspruchs 1 und eine Vorrichtung zum Herstellen von Flaschen (nachfolgend auch Hohlkörper genannt) nach dem Oberbegriff von Anspruch 12.

Solche Hohlkörperherstellungseinheiten werden in verschiedenen Industriezweigen eingesetzt, so z. B. in der Glas- bzw. in der Kunststoffindustrie. In der Glasindustrie werden damit z. B. Glasflaschen hergestellt. In der Kunststoffindustrie finden solche Einheiten Verwendung in der Herstellung von Hohlkörpern, insbesondere von Behältern wie z. B. Flaschen. Vorher erwärmte Flaschenrohlinge werden in Formen gegeben, wo sie mit Druckluft beaufschlagt werden und dadurch ihre endgültige Gestalt erhalten. Diese Maschinen weisen immer Steuereinrichtungen und manchmal auch Regeleinrichtungen auf, um eine möglichst optimale Behälterqualität bei möglichst hohen Ausstoßraten zu gewährleisten.

Gemäß dem Stand der Technik sind Hohlkörperherstellungseinheiten mit Steuereinheiten bekannt, wobei die Steuereinheit nur für die Steuerung der Hohlkörperherstellungsmaschine zuständig ist. Die Kompressoren, die die Druckluft zur Herstellung der Hohlkörper bereitstellen, laufen mit konstanter Leistung, wobei es unerheblich ist, ob ein Behälter mit einem Maximaldruck (z. B. 40 bar) oder mit einem geringeren Druck (z. B. 32 bar) hergestellt werden soll. Die Druckregelung findet nicht über den Kompressor, sondern über die Druckreduktion in der Hohlkörperherstellungsmaschine statt.

>

Weiterhin sind aus dem Stand der Technik Hohlkörperherstellungseinheiten bekannt, bei denen sowohl die Hohlkörperherstellungsmaschine als auch der Kompressor jeweils eine eigene Steuereinheit besitzen. Wird die Behälterproduktion in der Hohlkörperherstellungsmaschine umgestellt, so wird die Steuereinheit dieser und die Steuereinheit des Kompressors getrennt voneinander umgestellt.

Ein Problem bei diesen Vorrichtungen ist es, dass der Arbeitsaufwand bei Produktionsumstellungen sehr hoch ist, da mehrere Steuereinrichtungen betätigt werden müssen. Es ist vor allem dann ein Problem, wenn mehrere Behälterherstellungsmaschinen und mehrere Kompressoren vorhanden sind, die parallel umgestellt werden müssen. Dies kann z.B. dann der Fall sein, wenn an eine Behälterherstellungsmaschine mehrere Kompressoren angeschlossen sind, wenn ein Kompressor mehrere Behälterherstellungsmaschinen oder wenn ein Block mehrerer Kompressoren einen Block mit mehreren Behälterherstellungsmaschinen versorgt.

Die US 2003/0183966 A beschreibt eine Vorrichtung zur Herstellung von Ballonkathetern mit einer Mikrowellen-Wärmequelle, einer Form, einem Kompressor und einem Prozessor zur Steuerung und Regelung der Wärmequelle.

Die JP 2002-317770 A beschreibt, entsprechend den Oberbegriffen der Ansprüche 1 und 12, eine Vorrichtung zur Kontrolle von Kompressoren und eines Formblassystems mit mehreren Blasmaschinen, wobei diese mit einer Hauptkontrolleinheit und die Kompressoren mit einer zweiten Kontrolleinheit angesteuert werden, um unerwünschtes Abblasen von Druckluft zu reduzieren. Datenaustausch erfolgt von der Hauptkontrolleinheit zur zweiten Kontrolleinheit.

Die US 2004/0173949 beschreibt eine Vorrichtung zum Formblasen von Behältern, bei der Blasluft in einen Zwischenspeicher zurückgeführt wird. Die Blasluft wird aus einer zentralen Versorgungseinheit bereit gestellt. Die zurück gewonnene Blasluft wird z. B. in das Versorgungssystem geleitet oder zum Vorblasen verwendet.

Es ist deshalb Aufgabe der vorliegenden Erfindung, ein Verfahren und eine Vorrichtung bereitzustellen, mit dem, bzw. mit der es möglich ist, in einfacher Weise eine Produktionsumstellung in Hohlkörperherstellungseinheiten vorzunehmen. Zudem ist es Aufgabe der Erfindung, ein effizienteres und einfacheres Hohlkörperherstellungsverfahren bzw. eine einfachere und effizientere Vorrichtung bereitzustellen.

Bezüglich des Verfahrens wird diese Aufgabe gelöst durch die Merkmale des Anspruchs 1.

Dazu wird mit einer Steuereinheit sowohl ein Kompressor, als auch eine Hohlkörperherstellungsmaschine in einer Hohlkörperherstellungseinheit bidirektional gesteuert. Eine Hohlkörperherstellungsmaschine kann sowohl eine Glasflaschen- als auch eine Plastikbehälter herstellende Maschine sein. Vorzugsweise handelt es sich um Maschinen zum Herstellen für PET-Behälter, insbesondere für PET-Flaschen, wobei die Maschine gemäß einer bevorzugten Weiterbildung der Erfindung eine Rundläuferstreckblasmaschine ist. Ein Geradläufer ist selbstverständlich auch denkbar.

Erfindungsgemäß wird ein mehrstufiger Kompressor verwendet, und die rückgeführte Blasluft wird zwischen zwei Kompressorstufen des Kompressors eingeführt.

Die Hohlkörperherstellungseinheit besteht vorzugsweise aus einem Kompressor, aus einer Streckblasmaschine sowie aus einer Steuereinheit, die sowohl mit der Streckblasmaschine als auch mit dem Kompressor verbunden ist. Es liegt auch im Bereich der Erfindung, dass mehrere Streckblasmaschinen mit einem Kompressor, mehrere Kompressoren mit einer Streckblasmaschine sowie mehrere Streckblasmaschinen mit mehreren Kompressoren verbunden sind. Alle diese Varianten haben die Gemeinsamkeit, dass sie von einer gemeinsamen zentralen Steuereinheit gesteuert und/oder geregelt werden.

Es spielt keine Rolle, wo sich die Steuereinheit befindet. Eine Unterbringung an bzw. in der Streckblasmaschine ist genauso möglich wie die Unterbringung an bzw. im Kompressor oder in einem eigenen Schaltschrank.

In einer Streckblasmaschine werden Vorformlinge in der Regel kurz vor der Verarbeitung aufgewärmt, um dann in eine Blasform eingeführt zu werden, in der sie mit unter Druck stehender Blasluft in einem ersten Schritt vor- und in einem zweiten Schritt fertiggeblasen werden. Gemäß der Erfindung wird die Blasluft aus dem fertig geblasenen Behälter zum Kompressor zurückgeführt. Bei der Verwendung von Kompressoren ist es völlig irrelevant, welche Art verwendet wird. Hubkolbenkompressoren sind dabei genauso einsetzbar wie Schraubenverdichter, Roots-Gebläse, Kombinationen davon oder wie die Verwendung weiterer anderer Typen.

Auch die Rückführung der Blasluft in einen Zwischenspeicher und von dort aus zurück in den Kompressor ist möglich, um bestimmt ungewollte Druckschwankungen auszugleichen. Bei der Verwendung des Verfahrens ist es irrelevant, ob die gesamte Blasluft aus dem Blasprozess oder nur ein Teil rückgeführt wird.

Gemäß einer weiteren bevorzugten Weiterbildung der Erfindung wird die Rückführung der Blasluft zum Kompressor von der Steuereinheit gesteuert. Diese erfolgt vorzugsweise in Abhängigkeit von der Betriebssituation der Streckblasmaschine. Dies bedeutet, dass die Steuereinheit z.B. je nach Druckniveau in den geblasenen Behältern verschieden lange Rückführzeiten vorgibt. Dies hat den Vorteil, dass die Steuereinheit dadurch den Mittelweg zwischen optimaler Luftrückführung und optimaler Prozesszeit beschreiten kann. Unter Betriebssituation ist auch die Menge der zur Verfügung stehenden Blasluft im fertig geblasenen Behälter zu verstehen. Dadurch ergibt sich z.B. die Konstellation, dass die Steuerung trotz der Vorgabe des Maschinenbedienpersonals, dass eine Rückführung der Blasluft zum Kompressor gewünscht wird, keine Rückführung durchgeführt wird, wenn z.B. das Volumen der fertig geblasenen Behälter unter einem bestimmten Schwellenwert liegt.

Gemäß einer weiteren Weiterbildung der Erfindung wird die Steuerung des Kompressors durch die Eingabe von Parametern in die Steuereinheit, die den Kompressor betreffen, durchgeführt. Eine direkte Steuerung des Kompressors über die Steuereinheit ist also möglich.

Vorzugsweise wird der Kompressor aber nicht direkt sondern indirekt gesteuert. Dazu werden über die Steuereinheit die Streckblasmaschine betreffende Parameter eingegeben, die dementsprechende, den Kompressor betreffende Programme oder Programmteile aufrufen. Solche Parameter, die indirekt die Steuerung des Kompressors vornehmen, können z.B. der Vorblasdruck, der Fertigblasdruck, die Produktionsleistung der Streckblasmaschine, das Behältervolumen oder die Bereitschaft zur Luftrückführung zum Kompressor sein. D.h., dass z.B. durch die Eingabe eines Wertes für den Fertigblasdruck im Behälter in der Steuerung ein Programm aufgerufen wird, das dem Kompressor eine bestimmte bereitzustellende Soll-Leistung vorgibt. Es können beliebige Werte sein, die über die Steuereinheit an die Blasmaschine weitergegeben werden, und dadurch bestimmte Einstellungen bzw. Kriterien an den Kompressor weitergeben.

Gemäß einer weiteren bevorzugten Weiterbildung der Erfindung wird die Ist-Leistung des Kompressors durch die Verarbeitung von Messwerten durch die Steuereinheit geregelt. Ein solcher Messwert kann z.B. der Druck in der Rückführleitung von einer Blasstation zum Kompressor sein. Dadurch kann die Leistung des Kompressors noch genauer an die wahren Leistungsverhältnisse der Streckblasmaschine angepasst werden. Durch eine gemeinsame Steuerung ist es also möglich, einen Blasmaschine und einen Kompressor (oder auch mehrere Blasmaschinen bzw. mehrere Kompressoren) und deren angeschlossene Einheiten optimal in der Weise aufeinander abzustimmen, dass der Blasmedien- bzw. der Energieverbrauch optimiert wird.

Vor allem bei Ausführungsformen mit mehreren Kompressoren bzw. mehreren Blasmaschinen ist es sinnvoll, die einzelnen Einheiten nicht mit der zentralen Steuereinheit zu verkabeln, sondern einen drahtlosen Datenaustausch aufzubauen. Eine solche drahtlose Kommunikation kann z. B. durch die Verwendung des bluetooth Standards, von Infrarot, von Mikrowellen oder anderen elektromagnetischen Wellen sein.

Es versteht sich von selbst, dass die Hohlkörperherstellungseinheit nicht nur aus einer Blasmaschine, einem Kompressor und einer Steuereinheit bestehen, sondern dass eine solche Einheit auch andere Komponenten wie Sensoren, Förderstrecken, Ventile und weitere enthalten kann.

Gemäß einer bevorzugten Weiterbildung der Erfindung ist die Steuereinheit eine Speicherprogrammierbare Steuerung (SPS).

Die Aufgabe bezüglich der Vorrichtung wird gelöst durch die Merkmale des Anspruchs 13. Dazu wird eine Steuerung zum Datenaustausch sowohl mit der Streckblasmaschine als auch mit dem Kompressor verbunden. Der Datenaustausch erfolgt dabei bidirektional.

Ferner weist die Hohlkörperherstellungsmaschine eine pneumatische Rückführleitung auf, die zum Kompressor führt. Die Rückführleitung mündet zwischen zwei Stufen des mehrstufig ausgebildeten Kompressors.

Vorzugsweise handelt es sich bei der Hohlkörperherstellungsmaschine um eine Streckblasmaschine für Kunststoffflaschen, insbesondere für PET-Flaschen, wobei eine Streckblasmaschine umlaufender Bauart bevorzugt Verwendung findet.

Weiterhin besteht eine Weiterbildung der Erfindung darin, dass sich die zentrale Steuereinheit in der Blasmaschine befindet, wobei eine Unterbringung im Kompressor ebenfalls denkbar ist. Die Steuereinheit besitzt ein Eingabegerät, über das Parameter eingegeben und Einstellungen vorgenommen werden können. Das Eingabegerät ist gemäß einer weiteren Weiterbildung der Erfindung ein Touch-Screen. Andere Eingabegeräte, wie Schalter, Taster oder anderweitige Tastaturen sind auch möglich.

Eine weitere bevorzugte Weiterbildung der Erfindung besteht darin, dass sich die Steuereinheit in der Blasmaschine und das Eingabegerät an der Blasmaschine befindet. Eine Unterbringung der Steuereinheit in einem eigenen Schaltschrank oder die Unterbringung im Kompressor ist alternativ auch möglich.

Der bzw. die Kompressoren, die Steuereinheit sowie die eine bzw. die mehreren Blasmaschinen sind vorzugsweise mit Modulen zum drahtlosen Datenaustausch ausgestattet, wobei die Module z.B. bluetooth, Infrarot, Mikrowellen oder andere elektromagnetische Sende- bzw. Empfangseinheiten sein können.

Eine konkrete Ausgestaltung der Erfindung soll anhand der Figuren näher erläutert werden. Es zeigt:

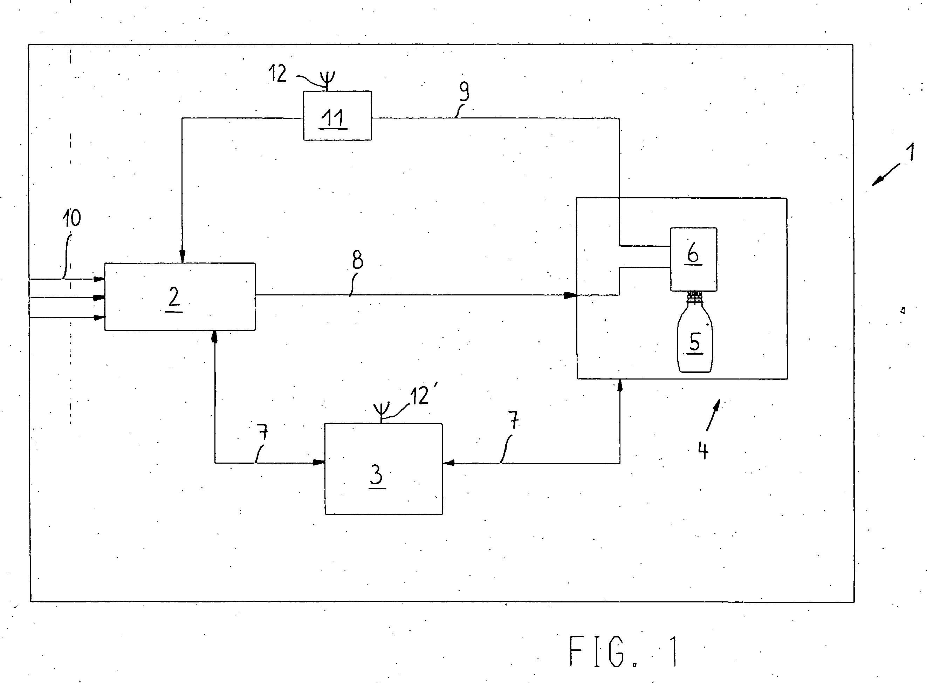

Figur 1 eine schematische Darstellung einer Einheit mit Blasmaschine, Kompressor und Steuereinheit.

Figur 1 zeigt einen Kompressor 2, der über eine Luftzufuhr 8 und eine Luftrückführüng 9 mit einer Blasmaschine 4 gekoppelt ist. Der Kompressor 2 besitzt eine Luftansaugung 10 über die gefilterte Frischluft angesaugt und verdichtet wird. Die komprimierte Luft wird über die Luftzufuhr 8 der Blasmaschine 4 zugeführt, wobei die Zufuhr über einen hier nicht gezeigten Ringkanal und eine Blasdüse 6 zum Behälter 5 erfolgt. Dieser wird durch mindestens zwei Blasphasen, nämlich eine Vorblasphase und eine Hauptblasphase von einem Rohling zum fertigen Behälter 5 aufgeblasen. Ist der Behälter 5 fertig geblasen, so kann die Blasluft aus dem Behälter über die Blasdüse 6 und der Luftrückführung 9 dem Kompressor 2 erneut zugeführt werden.

Die Steuerung der genannten Vorgänge übernimmt eine Steuereinheit 3, die über eine bidirektionale Signalübertragung 7 mit der Blasmaschine 4 sowie dem Kompressor 2 verbunden ist. Dadurch können über die Steuereinheit 3 alle Funktionen der angeschlossenen Maschinen abgerufen, überprüft und verändert werden.

Die Luftrückführung 9 ist mit einem Drucksensor 11 ausgestattet, der die Druckverhältnisse der zurückzuführenden Blasluft aus dem Behälter 5 überwacht. Diese Daten werden über eine Sende-/Empfangseinheit 12 vom Drucksensor 11 an die Sende-/Empfangseinheit 12'der Steuereinheit 3 drahtlos gesendet. Mit Hilfe dieses und anderer Ergebnisse kann die Steuereinheit 3 den Kompressor 2 optimal regeln, um den Energieverbrauch der gesamten Hohlkörperherstellungseinheit 1 zu optimieren bzw. reduzieren. Eine Möglichkeit der Steuerung und Regelung des Kompressors 2 ist die der Leistungssteuerung und Leistungsregelung.

## Patentansprüche

1. Verfahren zur Steuerung und Regelung einer Flaschenherstellungseinheit (1) mit mindestens einem Kompressor (2), mindestens einer Blasmaschine (4) zur Herstellung von Kunststoffflaschen und mit mindestens einer Steuereinheit (3), wobei die Steuereinheit (3) sowohl den Kompressor (2) als auch die Blasmaschine (4) zur Herstellung von Kunststoffflaschen über eine bidirektionale Signalübertragung (7) steuert, **dadurch gekennzeichnet, dass** der Kompressor (2) mehrstufig ist, wobei Blasluft von der Blasmachine (4) zum Kompressor (2) rückgeführt wird und die rückgeführte Blasluft zwischen zwei Kompressorstufen des Kompressors (2) eingeführt wird.

2. Verfahren nach Anspruch 1, **dadurch gekennzeichnet, dass** die Rückführung der Blasluft zum Kompressor (2) von der Steuereinheit (3) in Abhängig von der Betriebssituation der Blasmaschine (4) zur Herstellung von Kunststoffflaschen gesteuert wird.

3. Verfahren nach Anspruch 1, **dadurch gekennzeichnet, dass** die Rückführung der Blasluft zum Kompressor (2) von der Steuereinheit (3) in Abhängigkeit von der Menge der zur Verfügung stehenden Blasluft im fertig geblasenen Hohlkörper (5) gesteuert wird.

4. Verfahren nach Anspruch 1, **dadurch gekennzeichnet, dass** die Steuerung des Kompressors (2) durch die Eingabe von Parametern bezüglich des Kompressors (2) in die Steuereinheit (3) durchgeführt wird.

5. Verfahren nach Anspruch 1, **dadurch gekennzeichnet, dass** die Steuerung des Kompressors (2) durch die Eingabe von Parametern bezüglich der Blasmaschine (4) zur Herstellung von Kunststoffflaschen in die Steuereinheit (3) und durch den daraus resultierenden Aufruf von diesen Parametern zugeordneten Programmen bzw. Programmteilen bezüglich Einstellungen des Kompressors (2) durchgeführt wird.

6. Verfahren nach Anspruch 1, **dadurch gekennzeichnet, dass** die Soll-Leistung des Kompressors (2) durch die Eingabe von Parametern in die Steuereinheit (3) betreffend die Blasmaschine (4) zur Herstellung von Kunststoffflaschen vorgegeben wird.

7. Verfahren nach Anspruch 6, **dadurch gekennzeichnet, dass** die Ist-Leistung des Kompressors (2) durch die Verarbeitung von Messwerten, die in der Flaschenherstellungseinheit (1) aufgenommen werden, geregelt wird.

8. Verfahren nach Anspruch 7, **dadurch gekennzeichnet, dass** die Ist-Leistung des Kompressors (2) durch die Verarbeitung des Wertes des Ist-Druckes, der in einer Rückführleitung (9), die Blasluft von der Blasstation zum Kompressor (2) zurückführt, vorherrscht, geregelt wird.

9. Verfahren nach Anspruch 6, **dadurch gekennzeichnet, dass** als Parameter verwendet werden der Vorblasdruck und/oder der Fertigblasdruck und/oder die Produktionsleistung der Blasmaschine (4) zur Herstellung von Kunststoffflaschen und/oder die Hohlkörpergröße und /oder die Bereitschaft zur Luftrückführung zum Kompressor.

10. Verfahren nach wenigstens einem der vorhergehenden Ansprüche, **dadurch gekennzeichnet, dass** in der Flaschenherstellungseinheit (1) mindestens eine Streckblasmaschine Verwendung findet.

11. Verfahren nach wenigstens einem der Ansprüche 1 bis 10, **dadurch gekennzeichnet, dass** der Datenaustausch von der Steuereinheit (3) zu den Komponenten der Flaschenherstellungseinheit (1) drahtlos erfolgt.

12. Vorrichtung zum Herstellen von Flaschen (5) bestehend aus zumindest einem Kompressor (2), zumindest einer Blasmaschine (4) zur Herstellung von Kunststoffflaschen und zumindest einer Steuerung (3), wobei die Steuerung (3) zum Datenaustausch sowohl mit der Blasmaschine (4) zur Herstellung von Kunststoffflaschen als auch mit dem Kompressor (2) über eine bidirektionale Signalübertragung (7) verbunden ist, **dadurch gekennzeichnet, dass** der Kompressor (2) mehrstufig ist, die Blasmaschine (4) zur Herstellung von Kunststoffflaschen über eine Rückführleitung (9) pneumatisch mit dem Kompressor (2) verbunden und die mittels der Rückführleitung (9) rückgeführte Blasluft zwischen zwei Kompressorstufen einführbar ist.

13. Vorrichtung nach Anspruch 12, **dadurch gekennzeichnet, dass** die Blasmaschine (4) zur Herstellung von Kunststoffflaschen eine Streckblasmaschine ist.

14. Vorrichtung nach Anspruch 12, **dadurch gekennzeichnet, dass** die Blasmaschine (4) zur Herstellung von Kunststoffflaschen eine Maschine umlaufender Bauart ist.

15. Vorrichtung nach wenigstens einem der Ansprüche 12, bis 14, **dadurch gekennzeichnet, dass** sich die Steuereinheit (3) in der Blasmaschine (4) zur Herstellung von Kunststoffflaschen befindet.

16. Vorrichtung nach wenigstens einem der Ansprüche 12 bis 14, **dadurch gekennzeichnet, dass** sich die Steuereinheit (3) im Kompressor (2) befindet.

17. Vorrichtung nach wenigstens einem der Ansprüche 12 bis 16, **dadurch gekennzeichnet, dass** die Steuereinheit (3) über ein Eingabegerät verfügt, über das Parameter eingebbar und Einstellungen vornehmbar sind.

18. Vorrichtung nach Anspruch 17, **dadurch gekennzeichnet, dass** das Eingabegerät ein Touch-Screen ist.

19. Vorrichtung nach wenigstens einem der Ansprüche 12 bis 18 **dadurch gekennzeichnet, dass** sich die Steuereinheit (3) in der Blasmaschine (4) zur Herstellung von Kunststoffflaschen und die Eingabeeinheit an der Blasmaschine (4) zur Herstellung von Kunststoffflaschen befindet.

20. Vorrichtung nach wenigstens einem der Ansprüche 12 bis 19, **dadurch gekennzeichnet, dass** die Steuereinheit (3) und/oder die Blasmaschine (4) zur Herstellung von Kunststoffflaschen und/oder der Kompressor (2) und/oder ein Drucksensor (11) mit Modulen zum drahtlosen Datenaustausch ausgestattet sind.

## Claims

1. Process for the control and regulation of a bottle production unit (1) comprising at least one compressor (2), at least one blow-moulder (4) for the production of plastic bottles and at least one control unit (3), wherein the control unit (3) controls both the compressor (2) as well as the blow-moulder (4) for the production of plastic bottles by means of a two-way signal transfer system (7), and is **characterised in that** the compressor (2) has multiple stages, wherein blowing air from the blow-moulder (4) is recycled to the compressor (2) and this recycled blowing air is fed in between the two compressor stages of the compressor (2).

2. Process according to Claim 1, **characterised in that** the recycling of the blowing air to the compressor (2) is controlled by the control unit (3) depending on the operating state of the blow-moulder (4) for the production of plastic bottles.

3. Process according to Claim 1, **characterised in that** the recycling of the blowing air to the compressor (2) is controlled by the control unit (3) depending on the amount of blowing air which is available in the finished blow-moulded hollow body (5).

4. Process according to Claim 1, **characterised in that** control of the compressor (2) is achieved by entering parameters relating to the compressor (2) into the control unit (3).

5. Process according to Claim 1, **characterised in that** control of the compressor (2) is achieved by entering parameters relating to the blow-moulder (4) for the production of plastic bottles into the control unit (3) and by the resulting triggering of programmes and or programme components relating to the compressor (2) associated with these parameters.

6. Process according to Claim 1, **characterised in that** the target output of the compressor (2) is pre-set by entering parameters into the control unit (3) relating to the blow-moulder (4) for the production of plastic bottles.

7. Process according to Claim 6, **characterised in that** the actual output of the compressor (2) is controlled by processing the measured values which are fed into the bottle production unit (1).

8. Process according to Claim 7, **characterised in that** the actual output of the compressor (2) is controlled by processing the actual pressure value which predominates in a return line (9), which returns the blown air from the blowing unit to the compressor (2).

9. Process according to Claim 6, **characterised in that** the pre-blowing pressure and/or production-blowing pressure and/or the production output of the blow-moulder (4) for the production of plastic bottles and/or the size of the hollow body and/or the readiness for returning air to the compressor are used as parameters.

10. Process according to at least one of the preceding claims, **characterised in that** at least one stretch-blow moulder is used in the bottle production unit (1).

11. Process according to at least one of Claims 1 to 10, **characterised in that** data is exchanged wirelessly between the control unit (3) and the components of the bottle production unit (1).

12. Apparatus for the production of bottles (5) consisting of at least one compressor (2), at least one blow-moulder (4) for the production of plastic bottles and at least one control system (3), wherein the control system (3), which is connected so as to enable data exchange both with the blow-moulder (4) for the production of plastic bottles as well as with the compressor (2) by means of a two-way signal transfer system (7), is **characterised in that** the compressor (2) has multiple stages, and the blow-moulder (4) for the production of plastic bottles is connected pneumatically by means of a return line (9) to the compressor (2) and the blowing air recycled by means of the return line (9) can be fed in between the two stages of the compressor.

13. Apparatus according to Claim 12, **characterised in that** the blow-moulder (4) for the production of plastic bottles is a stretch-blow moulder.

14. Apparatus according to Claim 12, **characterised in that** the blow-moulder (4) for the production of plastic bottles is a machine with a rotating design.

15. Apparatus according to at least one of Claims 12 to 14, **characterised in that** the control unit (3) is positioned in the blow-moulder (4) for the production of plastic bottles.

16. Apparatus according to at least one of Claims 12 to 14, **characterised in that** the control unit (3) is positioned in the compressor (2).

17. Apparatus according to at least one of Claims 12 to 16, **characterised in that** the control unit (3) is provided with an input device, by means of which the parameters can be input and settings can be made.

18. Apparatus according to Claim 17, **characterised in that** the input device is a touch screen.

19. Apparatus according to at least one of Claims 12 to 18, **characterised in that** the control unit (3) is positioned in the blow-moulder (4) for the production of plastic bottles and the input unit is positioned on the blow-moulder (4) for the production of plastic bottles.

20. Apparatus according to at least one of Claims 12 to 19, **characterised in that** the control unit (3) and/or the blow-moulder (4) for the production of plastic bottles and/or the compressor (2) and/or a pressure sensor (11) are fitted with modules enabling wireless data exchange.

## Revendications

1. Procédé de commande et de régulation d'une unité de fabrication de bouteilles (1) comprenant un compresseur (2), au moins une machine de soufflage (4) pour la fabrication de bouteilles en matière plastique, et au moins une unité de commande (3), l'unité de commande (3) commandant aussi bien le compresseur (2) que la machine de soufflage (4) pour la fabrication de bouteilles en matière plastique, par l'intermédiaire d'une transmission de signal (7) bidirectionnelle, **caractérisé en ce que** le compresseur (2) est à étages multiples, de l'air de soufflage étant recyclé de la machine de soufflage (4) vers le compresseur (2), et l'air de soufflage recyclé étant introduit entre deux étages de compression du compresseur (2).

2. Procédé selon la revendication 1, **caractérisé en ce que** le recyclage de l'air de soufflage vers le compresseur (2) est commandé par l'unité de commande (3) en fonction de la situation de fonctionnement de la machine de soufflage (4) pour la fabrication de bouteilles en matière plastique.

3. Procédé selon la revendication 1, **caractérisé en ce que** le recyclage de l'air de soufflage vers le compresseur (2) est commandé par l'unité de commande (3) en fonction de la quantité d'air de soufflage disponible dans le corps creux (5) dont le soufflage est achevé.

4. Procédé selon la revendication 1, **caractérisé en ce que** la commande du compresseur (2) est effectuée en entrant, dans l'unité de commande (3), des paramètres relatifs au compresseur (2).

5. Procédé selon la revendication 1, **caractérisé en ce que** la commande du compresseur (2) est effectuée en entrant, dans l'unité de commande (3), des paramètres relatifs à la machine de soufflage (4) pour la fabrication de bouteilles en matière plastique, et par l'appel, qui en résulte, de programmes ou parties de programmes associés à ces paramètres et relatifs à des réglages du compresseur (2).

6. Procédé selon la revendication 1, **caractérisé en ce que** la puissance de consigne du compresseur (2) est prescrite en entrant, dans l'unité de commande (3), des paramètres concernant la machine de soufflage (4) pour la fabrication de bouteilles en matière plastique.

7. Procédé selon la revendication 6, **caractérisé en ce que** la puissance réelle du compresseur (2) est régulée par le traitement de valeurs de mesure, qui sont enregistrées dans l'unité de fabrication de bouteilles (1).

8. Procédé selon la revendication 7, **caractérisé en ce que** la puissance réelle du compresseur (2) est régulée par le traitement de la valeur de la pression réelle prévalant dans une conduite de recyclage (9), qui ramène de l'air de soufflage du poste de soufflage au compresseur (2).

9. Procédé selon la revendication 6, **caractérisé en ce que** l'on utilise comme paramètres, la pression de soufflage préalable, et/ou la pression de soufflage de finition, et/ou la productivité de la machine de soufflage (4) pour la fabrication de bouteilles en matière plastique, et/ou la grandeur des corps creux, et/ou la disponibilité au recyclage d'air vers le compresseur.

10. Procédé selon l'une au moins des revendications précédentes, **caractérisé en ce qu'**au moins une machine d'étirage-soufflage est utilisée dans l'unité de fabrication de bouteilles (1).

11. Procédé selon l'une au moins des revendications 1 à 10, **caractérisé en ce que** l'échange de données de l'unité de commande (3) vers les composants de l'unité de fabrication de bouteilles (1) est effectué sans fil.

12. Dispositif de fabrication de bouteilles (5) constitué d'au moins un compresseur (2), d'au moins une machine de soufflage (4) pour la fabrication de bouteilles en matière plastique et d'au moins une commande (3), la commande (3) étant reliée, pour l'échange de données, aussi bien avec la machine de soufflage (4) pour la fabrication de bouteilles en matière plastique, qu'avec le compresseur (2), par l'intermédiaire d'une transmission de signal (7) bidirectionnelle, **caractérisé en ce que** le compresseur (2) est à étages multiples, la machine de soufflage (4) pour la fabrication de bouteilles en matière plastique est reliée sur le plan pneumatique au compresseur (2) par l'intermédiaire d'une conduite de recyclage (9), et l'air de soufflage recyclé au moyen de la conduite de recyclage (9) peut être introduit entre deux étages de compression du compresseur.

13. Dispositif selon la revendication 12, **caractérisé en ce que** la machine de soufflage (4) pour la fabrication de bouteilles en matière plastique est une machine d'étirage-soufflage.

14. Dispositif selon la revendication 12, **caractérisé en ce que** la machine de soufflage (4) pour la fabrication de bouteilles en matière plastique est une machine de type à carrousel.

15. Dispositif selon l'une au moins des revendications 12 à 14, **caractérisé en ce que** l'unité de commande (3) se trouve dans la machine de soufflage (4) pour la fabrication de bouteilles en matière plastique.

16. Dispositif selon l'une au moins des revendications 12 à 14, **caractérisé en ce que** l'unité de commande (3) se trouve dans le compresseur (2).

17. Dispositif selon l'une au moins des revendications 12 à 16, **caractérisé en ce que** l'unité de commande (3) dispose d'un appareil d'entrée de données ou de saisie, par l'intermédiaire duquel il est possible d'entrer ou de saisir des paramètres et d'effectuer des réglages.

18. Dispositif selon la revendication 17, **caractérisé en ce que** l'appareil d'entrée de données ou de saisie est un écran tactile.

19. Dispositif selon l'une au moins des revendications 12 à 18, **caractérisé en ce que** l'unité de commande (3) se trouve dans la machine de soufflage (4) pour la fabrication de bouteilles en matière plastique, et l'unité d'entrée de données ou de saisie se trouve sur la machine de soufflage (4) pour la fabrication de bouteilles en matière plastique.

20. Dispositif selon l'une au moins des revendications 12 à 19, **caractérisé en ce que** l'unité de commande (3), et/ou la machine de soufflage (4) pour la fabrication de bouteilles en matière plastique, et/ou le compresseur (2), et/ou un capteur de pression (11), sont équipés de modules pour l'échange de données, sans fil.
